Europäisches Patentamt

European Patent Office

Office européen des brevets

(19)

(11) EP 0 702 865 B1

(12) FASCICULE DE BREVET EUROPEEN

(45) Date de publication et mention
de la délivrance du brevet:
**07.04.1999 Bulletin 1999/14**

(21) Numéro de dépôt: **94918414.7**

(22) Date de dépôt: **07.06.1994**

(51) Int Cl.6: **H04B 7/195**

(86) Numéro de dépôt international:
**PCT/FR94/00669**

(87) Numéro de publication internationale:
**WO 94/29969 (22.12.1994 Gazette 1994/28)**

(54) **SELECTION D'UN SATELLITE DE RATTACHEMENT**

WAHL EINES VERBINDUNGSSATELLITEN

SELECTION OF A PRIMARY SATELLITE

(84) Etats contractants désignés:
**AT BE CH DE DK ES FR GB IT LI NL SE**

(30) Priorité: **07.06.1993 FR 9306793**

(43) Date de publication de la demande:
**27.03.1996 Bulletin 1996/13**

(73) Titulaires:
- **ALCATEL**
  **75008 Paris (FR)**
- **ALCATEL N.V.**
  **2288 BH Rijswijk (NL)**

(72) Inventeur: **KUMAR, Vinod**
**F-75005 Paris (FR)**

(74) Mandataire:
**Pothet, Jean Rémy Emile Ludovic et al
ALCATEL ALSTHOM,
Département de Propriété Industrielle,
30, avenue Kléber
75116 Paris (FR)**

(56) Documents cités:
**EP-A- 0 283 302          EP-A- 0 421 698
GB-A- 2 170 672**

- **FOURTH IEE CONFERENCE ON
  COMMUNICATIONS, 21 Avril 1993,
  MANCHESTER,GB; pages 306 - 311 MAZELLA
  ET AL 'Multiple Access Techniques and
  Spectrum Utilisation of the GLOBALSTAR
  Mobile Satellite System'**

## Description

La présente invention concerne la sélection d'un satellite de rattachement.

Le domaine de l'invention est celui des radiocommunications, plus précisément celui des réseaux de radiocommunications par satellites dans lesquels un terminal se connecte à un satellite de rattachement au moyen d'une onde radio pour bénéficier des services offerts par un tel réseau.

Le réseau est ainsi conçu qu'une pluralité de satellites défilent autour de la terre, généralement sur plusieurs plans orbitaux, de sorte qu'un terminal puisse accéder à au moins un satellite dit de proximité à un instant donné. On considère ici qu'une transmission radio peut effectivement être établie entre le terminal et plusieurs satellites de proximité. De plus, il est sous-entendu que le terminal a acquis la sychronisation sur ceux-ci. Si le terminal souhaite accéder au réseau, ce que l'on apelle la prise de contact, il doit alors choisir le satellite de rattachement parmi les satellites de proximité. De plus, comme le satellite de rattachement défile, au cours de sa trajectoire la transmission avec le terminal va s'interrompre et, à ce moment, se posera le problème de l'affectation d'un nouveau satellite de rattachement à ce terminal, ce que l'on nomme le basculement de satellite.

Un tel réseau est évoqué dans l'article "Multiple Access and Spectrum Utilisation of the GLOBALSTAR Mobile Satellite System", MAZELLA et al., Fourth IEE Conference on Telecommunications, 18-21 April 1993, MANCHESTER, GB, pages 306-311. Il est ainsi prévu que la localisation du terminal soit réalisée dans une station terrestre, que la gestion des ressources radio soit effectuée dans un organe de contrôle également disposé au sol, et que l'affectation d'un nouveau satellite de rattachement au terminal soit opérée au moyen des éphémérides des différents satellites. Si cet article pose bien le problème de la sélection du satellite de rattachement, il ne propose pas de solution concrète.

Par ailleurs, à titre d'information, on mentionnera le système GPS qui a pour objet de déterminer la position d'un récepteur sur la terre à partir de données qui lui sont transmises par plusieurs satellites. Ces satellites étant également défilant, la demande de brevet EP-A-0 283 302 propose une méthode pour déterminer les coordonnées orbitales de ces satellites au moyen d'une pluralité de stations terrestres. Naturellement, ce document ne traite pas du problème de la sélection d'un satellite de rattachement puisque ce problème ne se pose pas.

Par contre, ce problème se pose de manière analogue dans les systèmes de radiocommunications terrestres, par exemple dans le système paneuropéen cellulaire numérique de radiocommunication connu sous le nom de système GSM. Dans ce cas, les communications transitent entre un terminal et une station de base par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder au système par la station de base qui émet ce canal afin de pouvoir établir des communications. Le terminal doit donc identifier ce canal de contrôle pour acquérir les informations qui lui permettent de se déclarer dans le système. Parmi ces informations on trouve notamment des informations de synchronisation, c'est pourquoi il est habituel de parler de procédure de synchronisation.

La solution généralement adoptée pour la synchronisation qui figure d'ailleurs dans les recommandations 4.08 et 5.08 du GSM se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser.

Cette solution est bien adaptée dans les systèmes terretres car plus la puissance d'un canal est élevée, meilleure sera la liaison. D'autre part, en première approximation, plus cette puissance est forte, plus la distance séparant le terminal de la station de base est courte, Si bien qu'en agissant de la sorte, on tend à optimiser les performances du système.

Cette solution est mal adaptée dans les systèmes par satellites car des signaux émis par différents satellites de proximité subissent une atténuation du même ordre de grandeur au niveau du terminal. De plus, la distance entre un terminal et un satellite n'intervient pas au premier ordre dans les performances du système.

Par ailleurs, dans un réseau terrestre, lorsqu'un terminal déjà connecté à une station de base reçoit les signaux qu'elle émet avec une puissance trop faible, on déplace la connexion de ce terminal vers une nouvelle station de base, procédure connue sous le vocable anglais de "handover". A cet effet, on prévoit un dipositif d'affectation qui sélectionne la nouvelle station de base au moyen de plusieurs critères, généralement. Parmi ces critères figure le niveau de puissance reçu par le terminal en provenance des différentes stations de base voisines qui l'entourent. On prend souvent en compte un critère additionnel qui reflète le nombre de canaux disponibles de ces station voisines pour éviter d'adresser le terminal vers une station de base déjà surchargée.

On remarque ici également que le critère de la puissance reçue ne peut pas être retenu non plus pour décider de l'affectation d'un nouveau satellite de rattachement à un terminal déjà connecté, procédure connue sous le vocable anglais de "changeover", ceci pour les raisons déjà mentionnées.

La présente invention a ainsi pour but de présenter des moyens qui permettent de sélectionner un satellite de rattachement lors de la prise de contact du terminal avec un réseau de radiocommunications par satellites et d'affecter un nouveau satellite de rattachement à ce terminal lorsque la liason avec le précédent ne peut être maintenue.

Ce but est atteint en retenant comme critère déterminant non pas la puissance à laquelle est reçue un signal d'un satellite mais plutôt la durée de visibilité de ce satellite, c'est-à-dire le temps qui va s'écouler avant que la transmission éventuelle entre le terminal et le satellite en cause ne soit interrompue.

On réalise ainsi un dispositif de sélection d'un satellite de rattachement pour un terminal d'un système de radiocommunications comprenant une pluralité de satellites défilant. Ce dispositif comprend des moyens de mesure pour établir une information de localisation fonction de la position du terminal par rapport à chacun des satellites de proximité sur lesquels il a acquis la synchronisation, des moyens d'estimation pour estimer la durée de visibilité de chacun de ces satellites à partir de l'information de localisation et des moyens de sélection pour sélectionner celui de ces satellites qui présente la plus grande durée de visibilité estimée.

On réalise aussi un dispositif de positionnement pour un terminal d'un système de radiocommunications comprenant une pluralité de satellites défilant et un dipositif d'affectation pour affecter un satellite de rattachement à ce terminal. Le terminal ayant acquis la synchronisation sur des satellites de proximité, ce dispositif comprend des moyens de mesure pour établir une information de localisation fonction de la position du terminal par rapport à chacun de ces satellites de proximité, des moyens d'estimation pour estimer la durée de visibilité de chacun de ces satellites de proximité à partir de l'information de localisation et des moyens de transmission pour transmettre au dipositif d'affectation la durée de visibilité estimée de deux au moins des satellites de proximité pour lesquels cette durée est la plus forte.

On réalise également un dispositif d'affectation d'un système de radiocommunications comprenant une pluralité de satellites défilant, prévu pour affecter un satellite de rattachement à un terminal parmi des satellites de proximité sur lesquels ce terminal a acquis la synchronisation. Selon un premier mode de réalisation du dispositif d'affectation, le terminal comprenant des moyens de mesure pour établir une information de localisation fonction de sa position par rapport à chacun des satellites de proximité, des moyens d'estimation pour estimer la durée de visibilité des satellites de proximité à partir de l'information de localisation et des moyens de transmission pour transmettre au dipositif d'affectation la durée de visibilité estimée de deux au moins des satellites de proximité, il sélectionne le satellite de rattachement notamment en fonction des durées de visibilité estimées transmises par le terminal. Selon un second mode de réalisation du dispositif d'affectation, le terminal comprenant des moyens de mesure pour établir une information de localisation fonction de sa position par rapport à chacun des satellites de proximité et des moyens de transmission pour transmettre au dipositif d'affectation l'information de localisation de deux au moins des satellites de proximité, il comprend des moyens d'estimation pour estimer la durée de visibilité des satellites de proximité à partir de l'information de localisation transmise par le terminal afin de sélectionner le satellite de rattachement notamment en fonction des durées de visibilité estimées.

Une solution avantageuse, lorsque chaque satellite émet une porteuse distincte, consiste à réaliser les moyens de mesure de sorte qu'ils produisent comme information de localisation le décalage Doppler de cette porteuse à un premier instant.

On dispose ainsi d'un moyen commode pour obtenir cette information de localisation.

Quel que soit le dispositif considéré, une première option consiste à choisir la durée de visibilité estimée comme une fonction croissante de la valeur du décalage Doppler à ce premier instant.

Une deuxième option consiste à prévoir que les moyens de mesure produisent de plus la valeur du décalage Doppler à un second instant séparé du premier instant par une période de mesure, un facteur de forme se définissant comme le rapport de la différence du décalage Doppler au premier instant et au second instant à la période de mesure affecté du signe du décalage Doppler au premier instant, la durée de visibilité estimée étant une fonction croissante de l'inverse du facteur de forme.

Une troisième option consiste à prévoir que les moyens de mesure produisent de plus la valeur du décalage Doppler à un second instant, un facteur de forme se définissant comme le rapport de la somme à la différence du décalage Doppler au premier instant et au second instant, la durée de visibilité estimée étant une fonction croissante du facteur de forme.

Une quatrième option consiste à prévoir que les moyens de mesure produisent de plus la valeur du décalage Doppler à un second instant séparé du premier instant par une période de mesure, la fonction représentant le décalage Doppler notamment l'instant de disparition étant déterminée par la valeur du décalage Doppler aux premier et second instants, la durée de visibilité estimée valant la différence de l'instant de disparition et du second instant.

Par ailleurs, selon une variante du dispositif de positionnement, le terminal ayant acquis la synchronisation sur des satellites de proximité, ce dispositif comprend des moyens de mesure pour établir une information de localisation fonction de la position du terminal par rapport à chacun des satellites de proximité et des moyens de transmission pour transmettre au dipositif d'affectation l'information de localisation.

De plus, chacun des satellites émettant une porteuse distincte, l'information de localisation est le décalage Doppler de cette porteuse.

La présente invention apparaitra maintenant de manière plus précise à la lecture de la desciption qui suit en se référant aux figures annexées qui repésentent :

- la figure 1, un exemple de signal de référence utilisé par des moyens de mesure convenant pour l'invention,
- la figure 2, un schéma représentant les éléments nécessaires à la mise en oeuvre de ces moyens de mesure,
- la figure 3, la forme du signal d'entrée et du signal de sortie d'un filtre adapté employé dans un mode de réalisation de ces moyens de mesure,
- la figure 4, une configuration représentant un terminal et des satellites de proximité,
- la figure 5, des courbes de variation du décalage Doppler en fonction du temps,
- la figure 6, un trièdre de référence lié au terminal dans lequel figurent les satellites de proximité,
- la figure 7, un plan de ce trièdre correspondant à l'élévation minimale des satellites de proximité.

On se réfera ici à titre indicatif aux systèmes utilisant des satellites défilant en obite basse dits "LEO", ce qui est le cas notamment du système connu sous le nom de Globalstar.

Le principe d'un tel système est d'utiliser un satellite, qui défile à une altitude par exemple d'environ 1390 kilomètres et selon une vitesse par exemple de l'ordre de 7,2 kilomètres par seconde, comme relais entre un terminal et une station de base.

Le satellite reçoit donc le signal radio en provenance de la station de base et le réémet sur une porteuse en direction du terminal. Le rôle joué par ce satellite est un simple rôle de "miroir" : il transmet tel que le signal qu'il reçoit de la station de base, en effectuant tout au plus une transposition de fréquence.

Comme cela a déjà été mentionné, le point important est d'estimer la durée de visibilité du satellite, c'est-à-dire le temps pendant lequel le terminal va pouvoir utiliser ce satellite. Ce temps d'utilisation est limité par la disparition du satellite à l'horizon, par exemple, ou bien par son élévation lorsqu'elle atteint une valeur prédéterminée.

Un moyen avantageux consiste à mesurer dans le terminal le décalage Doppler de la porteuse émise par le satellite.

On présentera maintenant une méthode pour la mesure de ce décalage.

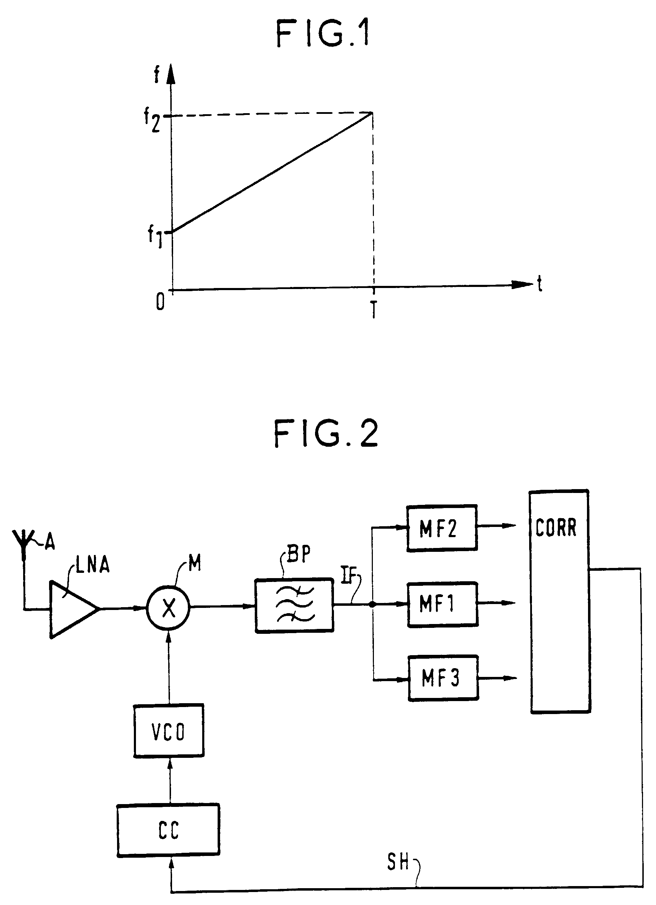

En référence à la figure 1, la porteuse véhicule un paquet de signalisation. Un paquet se définit comme le support d'un signal pendant une durée déterminée T. Ici ce signal, le signal de référence a un fréquence qui varie linéairement en fonction du temps. Si l'on prend comme origine du temps t le début du paquet, la fréquence instantanée f de ce signal peut alors se représenter par l'expression suivante :

$$f = \left( \frac{f_2 - f_1}{T} \right) . t + f_1$$

Le signal est supposé d'amplitude constante et il peut se présenter naturellement sous une forme analogique ou bien numérique.

La figure 2 représente les éléments d'un récepteur nécessaire dans un mode de réalisation parmi d'autres possibles. De manière connue, ce récepteur comprend donc une antenne A pour recevoir la porteuse. Cette antenne est suivie d'un amplificateur LNA, généralement un amplificateur faible bruit.

Le récepteur comprend également un mélangeur M qui reçoit d'une part le signal de sortie de l'amplificateur LNA et d'autre part le signal de sortie d'un oscillateur local VCO, un oscillateur commandé en tension par exemple. Cet oscillateur est commandé par un circuit de commande CC dont la fonction sera précisée par la suite. La sortie du mélangeur est raccordée à un filtre passe-bande BP qui produit comme signal de sortie un signal à fréquence intermédiaire IF. Ce filtre passe bande est réalisé conformément aux critères usuels de réjection de bande latérale et de distorsion de phase. Sa fréquence centrale et sa bande passante seront définies par la suite.

Le récepteur est prévu pour travailler à une fréquence intermédiaire bien précise que l'on appellera fréquence théorique $f_T$, et qui correspond au cas où il n'y a pas de décalage Doppler.

Si l'on considère maintenant que la porteuse est soumise à l'effet Doppler, le signal à fréquence intermédiaire va voir sa fréquence varier entre $f_T - \Delta f$ et $f_T + \Delta f$ où $\Delta f$ représente l'amplitude de décalage Doppler, ceci pour une valeur de commande de l'oscillateur local VCO qui devrait conduire à une fréquence égale à $f_T$. Par conséquent on choisira la fréquence centrale du filtre passe-bande BP égale à $f_T$ et sa bande passante égale à celle du signal augmentée de $2.\Delta f$.

Selon l'invention, le récepteur comprend trois filtres adaptés au signal de référence :

- le premier MF1 centré sur la fréquence théorique $f_T$,

- le second MF2 centré sur la fréquence théorique $f_T$ diminuée de l'amplitude de décalage Doppler, soit $f_T - \Delta f$,
- le troisième MF3 centré sur la fréquence théorique $f_T$ augmentée de l'amplitude de décalage Doppler, soit $f_T + \Delta f$.

Ces filtres adaptés peuvent consister, à titre d'exemple, en des filtres à ondes de surface.

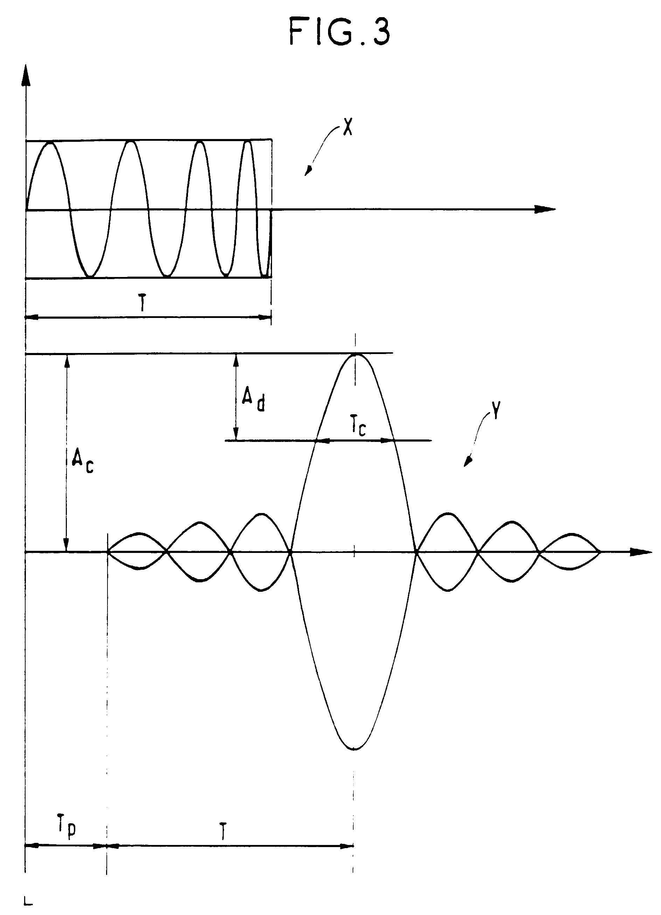

Dans ce cas, on a représenté à la figure 3 le signal d'entrée X et l'enveloppe Y du signal de sortie d'un tel filtre en prenant la même échelle de temps.

Ce filtre présente un temps de propagation Tp et produit un signal de sortie dont la forme bien connue de l'homme du métier est en sinx/x amorti et qui présente donc un lobe principal dont la valeur crête vaut $A_c$ et dont la largeur mesurée à une amplitude valant cette valeur crête $A_c$ diminuée d'une valeur prédéterminée $A_d$ (20 dB par exemple) vaut Tc.

On détermine un facteur de forme W qui caractérise la forme du lobe principal. On pourrait choisir la valeur crête $A_c$, ou bien l'énergie contenue dans ce lobe ou bien encore la largeur $T_c$ de ce lobe. Ici, à titre d'exemple on choisit le rapport de la valeur crête $A_c$, à la largeur $T_c$ :

$$W = A_c/T_c$$

Chacun des trois filtres adaptés MF1, MF2, MF3 a une bande passante prévue pour qu'un signal d'entrée correspondant au signal de référence mais décalée en fréquence de $\Delta f$ par rapport à sa fréquence d'accord donne

lieu à un facteur de forme W de valeur supérieure à un seuil de détection $S_d$ de sorte que le lobe principal correspondant puisse être détecté.

Le récepteur comprend de plus un circuit de correction CORR représenté dans la figure 2. Ce circuit reçoit les signaux des sortie des premiers MF1, second MF2 et troisième MF3 filtre adapté pour calculer respectivement un premier $W_1$, un second $W_2$ et un troisième $W_3$ facteur de forme. Un facteur de forme dont la valeur est inférieure au seuil de détection $S_d$ est forcé à zéro. Le circuit de correction CORR produit un signal de déplacement SH, à destination du circuit de commande, comme suit :

$$SH = \frac{W_2 - W_3}{W_1 + W_2 + W_3} . \Delta f$$

Il s'agit en fait de l'opposé du barycentre des fréquences centrales des filtres adaptés pondérées par les facteurs de forme correspondant. On peut également choisir d'appliquer une valeur proportionnelle à ce barycentre ou de tout autre nature pourvu qu'elle représente l'écart entre la fréquence théorique $f_T$ et la fréquence du signal à fréquence intermédiaire.

On rappelle que l'on s'attache à mesurer et à corriger le décalage Doppler de la porteuse, sur laquelle, par hypothèse, figure le paquet de signalisation.

On rappelle de plus que le paquet de signalisation de durée T est émis périodiquement selon une période de répétition $T_r$.

Ainsi le circuit de commande CC commande l'oscillateur local VCO de sorte que le signal à fréquence intermédiaire IF soit à la fréquence $f_T$ lorsque la porteuse n'est pas affectée de Doppler. Au bout d'une première période de latence au moins égale à $T + T_r$, le circuit de commande reçoit le signal de déplacement SH qui prend ici pour valeur $D_1$. Il commande alors l'oscillateur local VCO pour qu'il produise une fréquence augmentée de $D_1$.

Il attend alors une deuxième période de latence pour lire la nouvelle valeur $D_2$ du signal de déplacement SH et corrige à nouveau l'oscillateur local VCO pour qu'il produise une fréquence augmentée de $D_2$. Et ainsi de suite, Si bien qu'après la nième période de latence, le signal de déplacement SH vaut $D_n$.

Lorsque $D_n$ est inférieur à un seuil de correction $S_c$ qui est estimé suffisant dans la présente application, 100 Hz par exemple, le décalage Doppler est corrigé et sa valeur D vaut :

$$D = \sum_{i=1}^{n} D_i$$

On a prévu jusqu'à présent d'utiliser trois filtres adaptés. Or, dans de nombreux cas, l'amplitude du décalage Doppler $\Delta f$ permet de réaliser un seul filtre adapté centré sur la fréquence théorique $f_T$ dont la bande passante est calculée de sorte que son facteur de forme soit supérieur au seuil de détection $S_d$ Si le signal d'entrée correspond au signal de référence décalé de $\pm \Delta f$.

Dans ce cas, le circuit de commande CC commande l'oscillateur local VCO de sorte que le signal à fréquence intermédiaire IF soit à la fréquence $f_T$ lorsque la porteuse n'est pas affectée de Doppler.

Le circuit de correction CORR produit maintenant comme signal de déplacement SH le facteur de forme issu de l'unique filtre adapté.

Au bout d'une première période de latence, le facteur de forme vaut $W_{T0}$. Le circuit de commande CC commande alors l'oscillateur local VCO pour qu'il diminue la fréquence intermédiaire de $\Delta f/2$ puis enregistre au bout d'une seconde période de latence la valeur $W_{m0}$ du facteur de forme. Le circuit de commande CC commande alors l'oscillateur local VCO pour qu'il augmente la fréquence intermédiaire de $\Delta f/2$ puis enregistre au bout d'une troisième période de latence la valeur $W_{M0}$.

Il recherche alors laquelle des trois valeurs $W_{T0}$, $W_{m0}$, $W_{M0}$ est la plus grande. On conviendra de la noter $W_{T1}$ et il apparait que la fréquence $F_1$ qui a produit cette valeur est la plus proche de la fréquence d'accord.

Le circuit de commande CC commande maintenant l'oscillateur local VCO pour qu'il produise la fréquence intermédiaire $F_1 - \Delta f/4$. Au bout d'une quatrième période de latence, il enregistre la valeur $W_{m1}$ du signal de déplacement. Il recherche alors laquelle des trois valeurs $W_{T1}$, $W_{m1}$ ou $W_{M1}$ est la plus grande. On conviendra de la noter $W_{T2}$ et il apparait que la fréquence $F_2$ qui a produit cette valeur est la plus proche de la fréquence d'accord.

On procède ensuite de même en commandant l'oscillateur local pour obtenir les fréquences intermédiaires $F_2 \pm \Delta f/8$. Et on poursuit cette recherche par approximations successives en divisant par deux l'excursion de fréquence à chaque pas pour obtenir $F_n$ de sorte que $\Delta f/2^n$ soit inférieur à un seuil de correction $S_c$ qui est estimé suffisant dans la présente application, 100 Hz par exemple.

Le décalage Doppler D est alors corrigé et sa valeur vaut :

$$D = F_n - f_T.$$

On a décrit le dispositif de correction de décalage Doppler avec un ou trois filtres adaptés réalisés selon la technologie dite à onde de surface. Cet exemple a été choisi car il est bien connu de l'homme de métier, notamment lorsque la fréquence intermédiaire est de l'ordre d'une dizaine à quelques dizaines de MHz.

L'homme de métier comprend tout aussi bien que ces filtres peuvent être réalisés en technologie numérique au moyen d'un processeur numérique de signal. Cette réalisation est particulièrement bien adaptée au cas des systèmes dits à bande étroite, dans lesquels des canaux sont espacés de l'ordre de 30 kHz par exemple. On peut alors choisir une fréquence intermédiaire égale à zéro pour traiter directement le signal en bande de base.

Il apparait de plus que l'ensemble des filtres adaptés et du circuit de correction peut se représenter comme une entité que l'on nommera circuit d'analyse.

Par ailleurs, on a présenté le signal de référence comme un signal dont la fréquence varie linéairement avec le temps. Il s'agit bien sûr d'un simple exemple et l'on peut prévoir bien d'autres lois de variations, ceci d'autant plus aisément que le traitement du signal est numérique.

En outre, le circuit d'analyse qui permet d'estimer le décalage Doppler a été réalisé au moyen d'un ou plusieurs filtres. Il existe d'autres solutions, notamment l'analyse spectrale, au moyen d'une transformée de Fourier rapide par exemple, que l'on ne développera pas plus car bien connues de l'homme de métier.

Par ailleurs, la fréquence de répétition des paquets de signalisation qui est l'inverse de la période de répétition $T_r$ est habituellement liée à la fréquence de la porteuse par une relation de proportionnalité mais lui est très largement inférieure Si bien qu'elle est beaucoup moins affectée par l'effet Doppler. On peut donc , dans un premier temps faire l'acquisition de cette fréquence de répétition en mesurant l'intervalle de temps qui sépare deux lobes principaux successifs à la sortie d'un filtre adapté, comme cela a déjà été présenté. On obtient ainsi une bonne approximation de la référence de temps de la station de base et on corrige l'oscillateur local VCO au moyen du circuit de commande CC pour qu'il adopte cette référence.

On peut maintenant procéder à l'estimation du décalage Doppler comme exposé plus haut, cette estimation n'étant pratiquement plus entachée de l'erreur dûe au décalage des références temporelles de la station de base et du terminal.

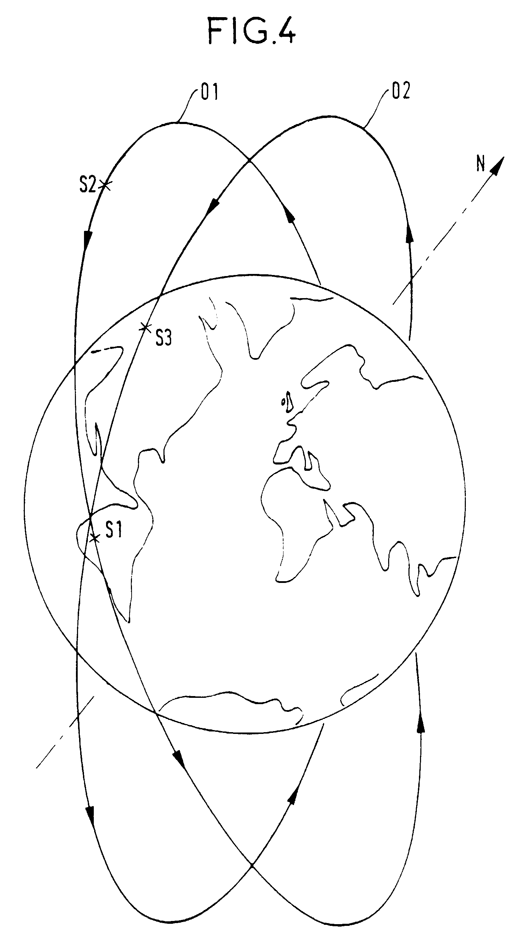

Les moyens de mesure du décalage Doppler implantés dans le terminal étant décrits, on va s'attacher à présenter une configuration particulière du système en référence à la figure 4. Dans cet exemple donné à titre indicatif, on a schématisé la terre avec son axe nord-sud, un terminal T et deux orbites O1, O2. On a également figuré trois satellites de proximité susceptibles de devenir satellite de rattachement, le premier S1 et le deuxième S2 sur la première orbite O1, le troisième S3 sur la deuxième orbite O2.

Le décalage Doppler dépend de l'élévation du satellite par rapport au terminal, c'est-à-dire de l'angle entre le plan tangent à la terre passant par le terminal et la droite joignant le terminal au satellite. D'autre part, on prévoit généralement d'utiliser un satellite pour une élévation supérieure à un élévation minimale donnée qui correspond à un instant de disparition.

La forme du décalage Doppler en fonction du temps dépend de l'élévation du satellite pour un point fixe sur la terre. Si l'on fait varier cette élévation, on obtient une famille de courbes bien connues de l'homme du métier qui varient entre deux extrémités pour une élévation minimale donnée que l'on peut fixer à 20° par exemple, une fréquence maximum $f_M$ et un temps minimum $T_m$ d'une part, et une fréquence minimum $f_m$ et un temps maximum $T_M$ d'autre part, ce temps maximum correspondant à l'instant de disparition. On sait par ailleurs que $f_m$ et $f_M$ ont même valeur absolue et sont de signes opposés.

Ces courbes présentent un seul point commun qui a pour coordonnées $(T_m + T_M)/2$ et $(f_m + f_M)/2$. La conséquence directe de cette particularité est que Si l'on connait la valeur du décalage Doppler à deux instants séparés d'une durée connue, on sait sur laquelle des courbes le satellite est situé.

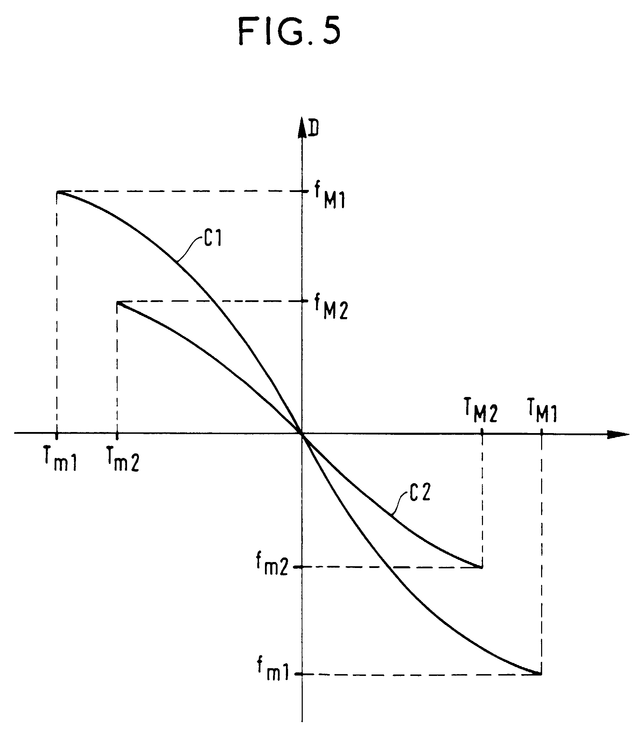

Dans la figure 5, on a dessiné deux de ces courbes qui représentent la valeur du décalage Doppler D en fonction du temps, la première C1 qui correspond à la première orbite O1 et qui varie entre les points $(T_{m1}, f_{M1})$ et $(T_{M1}, f_{m1})$ et la seconde C2 qui correspond à la seconde orbite O2 et qui varie entre les points $(T_{m2}, f_{M2})$ et $(T_{M2}, f_{m2})$.

On s'aperçoit immédiatement qu'un satellite placé sur la première orbite présente une durée potentielle d'utilisation $(T_{M1} - T_{m1})$ supérieure à celle $(T_{M2} - T_{m2})$ d'un satellite placé sur la deuxième orbite.

La durée de visibilité sera d'autant plus grande que l'on se situera sur la partie gauche de la courbe, c'est-à-dire vers les valeurs élevées du décalage. Ainsi, en première approximation, on peut dire que plus le décalage est élevé, plus la durée de visibilité est grande. On peut donc prévoir des moyens d'estimation qui établissent une durée de visibilité estimée comme une fonction croissante de la valeur du décalage Doppler, une fonction d'égalité par exemple.

On remarque également sur ces courbes que pour une valeur positive du décalage, plus celui-ci est important, plus sa pente est faible. Ainsi on peut faire une autre approximation qui consiste à dire que, Si l'on définit un facteur de forme comme l'opposé de la pente affecté du signe du décalage, la durée de visibilité croît avec l'inverse de ce facteur de forme. La pente sera calculée par extrapolation à partir de la mesure du décalage Doppler à deux instants distincts séparés par une période de mesure connue.

En combinant les deux approximations mentionnées ci-dessus, il apparaît que l'on peut estimer la durée de visibilité d'une troisième manière en calculant le rapport de la valeur moyenne du décalage pendant cette période de mesure à la pente correspondante.

Il apparait que dans tous les cas ce sera bien le satellite S2 qui sera sélectionné, ce que l'on souhaite, car il est situé sur une orbite relativement proche de la verticale au terminal, il en est relativement éloigné et il s'en rapproche.

On présentera maintenant une méthode d'estimation plus précise mais plus complexe.

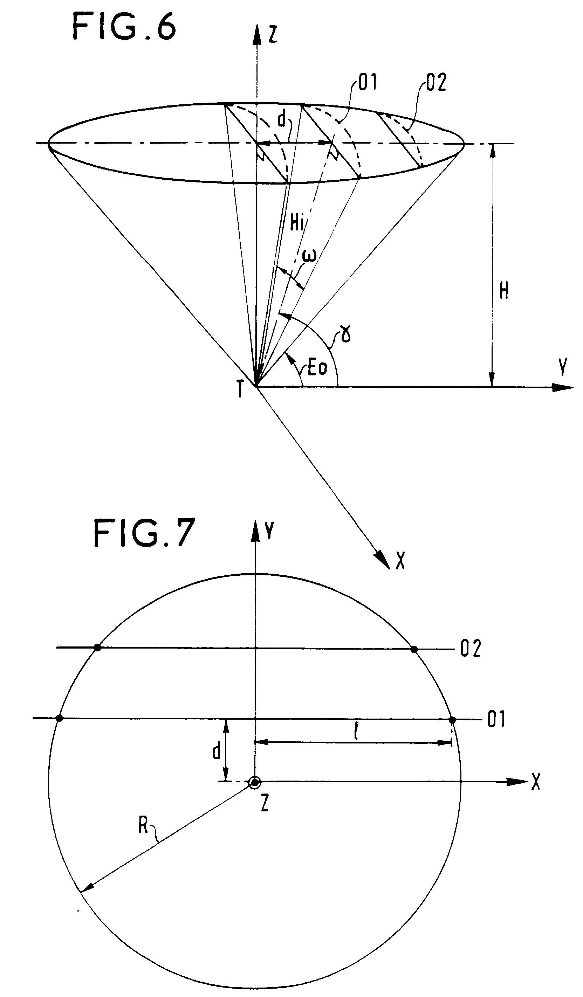

En effet, la valeur de l'élévation $\varepsilon(t)$ d'un satellite en un point d'une orbite quelconque sous réserve que cette élévation soit supérieure à l'élévation minimale $E_0$ peut s'exprimer comme suit en référence aux figures 6 et 7 qui représentent respectivement un trièdre de référence Txyz centré sur le terminal T où l'axe Tz figure la verticale, et un plan perpendiculaire à cette verticale d'altitude H.

Tous les satellites évoluent à une altitude H. Par conséquent, l'ensemble des orbites possibles représente une sphère dont le centre est celui de la terre. Pour le terminal, cet ensemble est alors limité à une calotte sphérique délimitée par l'intersection d'un cône d'angle d'ouverture $\pi/2 - E_0$ avec cette sphère, Si $E_0$ représente l'élévation minimale.

En se plaçant sur une orbite particulière, la première orbite O1 par exemple, on adopte les notations suivantes :

- $\gamma$ : élévation maximale sur cette orbite,
- $H_i$: distance du terminal T à la corde sous-tendue par les deux points de cette orbite sur la calotte sphérique qui correspondent à l'élévation minimale $E_0$,
- $\omega$ : angle entre les deux droites passant par l'origine et par les deux points de cette orbite sur la calotte sphérique qui correspondent à l'élévation minimale $E_0$,
- d : distance de cette même corde à l'axe Oz,
- 1 : demi-longueur de cette corde,
- R : rayon de la calotte sphérique pour l'élévation minimale $E_0$, soit la valeur maximale de d,
- $\Omega$ : vitesse angulaire du satellite,
- v : vitesse linéaire du satellite,
- c : vitesse de propagation des ondes radio,
- p : fréquence de la porteuse,
- D : valeur du décalage Doppler.

On peut alors écrire :

$$d = H \tan(\pi/2 - \gamma) = H/\tan(\gamma)$$

$$R = H \tan(\pi/2 - E_0) = H/\tan(E_0)$$

$$1 = \sqrt{R^2 - d^2} = H \sqrt{\frac{1}{\tan^2(E_0)} - \frac{1}{\tan^2(\gamma)}}$$

$$\cos(\pi/2 - \gamma) = H/H_i = \sin(\gamma)$$

d'où :

$$H_i = H/\sin(\gamma)$$

$$\tan(\omega/2) = 1/H_i = \frac{\sqrt{\dfrac{1}{\tan^2(E_0)} - \dfrac{1}{\tan^2(\gamma)}}}{\dfrac{1}{\sin(\gamma)}}$$

d'où :

$$\omega = 2\ \mathrm{Arctan}\left[\sin(\gamma)\sqrt{\frac{1}{\tan^2(E_0)} - \frac{1}{\tan^2(\gamma)}}\right]$$

L'élévation $\varepsilon(t)$ varie donc en fonction du temps dans l'intervalle $[\pi/2 - \omega/2, \pi/2 + \omega/2]$

La valeur du décalage Doppler D est donnée par :

$$D = \frac{v}{c}.p.\sin(\gamma).\cos(\varepsilon(t,\gamma))$$

En notant $\varepsilon_0 = \pi/2 - \omega/2$, l'élévation $\varepsilon(t,\gamma)$ vaut :

$$\varepsilon(t,\gamma) = \varepsilon_0 + \Omega.t$$

Il apparait ainsi qu'en connaissant deux valeurs particulières du décalage Doppler, la seconde étant mesurée après la première à la suite d'une période de mesure connue, on peut retrouver la valeur de l'élévation maximale $\gamma$ sur l'orbite considérée et, partant, la forme générale du décalage D en fonction du temps. A ce point, il est aisé de retrouver l'instant de disparition $T_M$ et d'en déduire la durée de visibilité qui est la différence de cet instant de disparition et du temps auquel a été faite la seconde mesure du décalage.

Les moyens d'estimation peuvent donc être prévus pour calculer la durée de visibilité de cette manière.

Par ailleurs, on s'aperçoit qu'il suffit de connaitre deux valeurs successives du décalage pour obtenir la durée de visibilité. On peut donc prévoir un tableau à double entrée, une mémoire par exemple, la première entrée correspondant à la première mesure du décalage, la seconde entrée correspondant à la seconde mesure du décalage, l'une quelconque des cases du tableau représentant la durée de visibilité correspondante.

Ce tableau peut être rempli en utilisant les équations mentionnées ci-dessus mais il peut également être réalisé de manière empirique. On peut en effet envisager de faire des campagnes de mesure sur le terrain pour les différentes situations possibles.

En conclusion, on comprend bien qu'il faut que les moyens de mesure soient agencés dans le terminal. Ce n'est pas nécessairement le cas des moyens d'estimation qui peuvent consister en un microprocesseur, un processeur de traitement numérique du signal, par exemple.

Selon une première option, ces moyens d'estimation sont également disposés dans le terminal et peuvent être réalisés à l'aide du cicuit de commande, par exemple. On prévoit dans ce cas des moyens de transmission pour acheminer la durée de visibilité au dispositif d'affectation qui est situé en un endroit quelconque du système. On notera que ces moyens de transmission peuvent être réalisés à l'aide du circuit d'émission déjà prévu dans le terminal.

Selon une seconde option, ces moyens d'estimation peuvent être placés ailleurs, notamment dans le dispositif d'affectation. On prévoit dans ce cas des moyens de transmission pour acheminer l'information de localisation au dispositif d'affectation.

**Revendications**

1. Dispositif de sélection d'un satellite de rattachement pour un terminal (T) d'un système de radiocommunications comprenant une pluralité de satellites défilant, caractérisé en ce qu'il comprend des moyens de mesure pour établir une information de localisation (D) fonction de la position du terminal par rapport à chacun des satellites de proximité (S1, S2, S3) sur lesquels il a acquis la synchronisation, des moyens d'estimation pour estimer la durée de visibilité de chacun desdits satellites à partir de ladite information de localisation et des moyens de sélection pour sélectionner celui desdits satellites (S2) qui présente la plus grande durée de visibilité estimée.

2. Dispositif de positionnement pour un terminal (T) d'un système de radiocommunications comprenant une pluralité de satellites défilant et un dispositif d'affectation pour affecter un satellite de rattachement à ce terminal caractérisé en ce que, le terminal (T) ayant acquis la synchronisation sur des satellites, de proximité (S1, S2, S3), il comprend des moyens de mesure pour établir une information de localisation (D) fonction de la position du terminal par rapport à chacun desdits satellites de proximité, des moyens d'estimation pour estimer la durée de visibilité de chacun desdits satellites de proximité à partir de ladite information de localisation et des moyens de transmission pour transmettre audit dipositif d'affectation la durée de visibilité estimée de deux au moins desdits satellites de proximité pour lesquels cette durée est la plus forte.

3. Dispositif d'affectation d'un système de radiocommunications comprenant une pluralité de satellites défilant, prévu pour affecter un satellite de rattachement à un terminal (T) parmi des satellites de proximité (S1, S2, S3) sur lesquels ce terminal a acquis la synchronisation, caractérisé en ce que, ledit terminal comprenant des moyens de mesure pour établir une information de localisation (D) fonction de sa position par rapport à chacun desdits satellites de proximité, des moyens d'estimation pour estimer la durée de visibilité desdits satellites de proximité à partir de ladite information de localisation et des moyens de transmission pour transmettre audit dipositif d'affectation la durée de visibilité estimée de deux au moins desdits satellites de proximité, il sélectionne ledit satellite de rattachement notamment en fonction desdites durées de visibilité estimées transmises par ledit terminal.

4. Dispositif d'affectation d'un système de radiocommunications comprenant une pluralité de satellites défilant, prévu pour affecter un satellite de rattachement à un terminal (T) parmi des satellites de proximité (S1, S2, S3) sur lesquels ce terminal a acquis la synchronisation, caractérisé en ce que, ledit terminal comprenant des moyens de mesure pour établir une information de localisation (D) fonction de sa position par rapport à chacun desdits satellites de proximité et des moyens de transmission pour transmettre audit dipositif d'affectation ladite information de localisation de deux au moins desdits satellites de proximité, il comprend des moyens d'estimation pour estimer la durée de visibilité desdits satellites de proximité à partir de ladite information de localisation transmise par ledit terminal afin de sélectionner ledit satellite de rattachement notamment en fonction desdites durées de visibilité estimées.

5. Dispositif selon l'une quelconque des revendications 1 à 4 caractérisé en ce que, chacun desdits satellites émettant une porteuse distincte, lesdits moyens de mesure produisent comme information de localisation le décalage Doppler (D) de ladite porteuse à un premier instant.

6. Dispositif selon la revendication 5 caractérisé en ce que ladite durée de visibilité estimée est une fonction croissante de la valeur du décalage Doppler (D) à ce premier instant.

7. Dispositif selon la revendication 5 caractérisé en ce que, lesdits moyens de mesure produisant de plus la valeur du décalage Doppler (D) à un second instant séparé dudit premier instant par une période de mesure, un facteur de forme se définissant comme le rapport de la différence du décalage Doppler audit premier instant et audit second instant à ladite période de mesure affecté du signe du décalage Doppler audit premier instant, ladite durée de visibilité estimée est une fonction croissante de l'inverse dudit facteur de forme.

8.  Dispositif selon la revendication 5 caractérisé en ce que, lesdits moyens de mesure produisant de plus la valeur du décalage Doppler (D) à un second instant, un facteur de forme se définissant comme le rapport de la somme à la différence du décalage Doppler audit premier instant et audit second instant, ladite durée de visibilité estimée est une fonction croissante dudit facteur de forme.

9.  Dispositif selon la revendication 5 caractérisé en ce que, lesdits moyens de mesure produisant de plus la valeur du décalage Doppler (D) à un second instant séparé dudit premier instant par une période de mesure, la fonction représentant le décalage Doppler notamment l'instant de disparition ($T_M$) étant déterminée par la valeur du décalage Doppler auxdits premier et second instants, ladite durée de visibilité estimée vaut la différence dudit instant de disparition et dudit second instant.

10. Dispositif de positionnement pour un terminal (T) d'un système de radiocommunications comprenant une pluralité de satellites défilant et un dispositif d'affectation pour affecter un satellite de rattachement à ce terminal caractérisé en ce que, le terminal ayant acquis la synchronisation sur des satellites de proximité (S1, S2, S3), il comprend des moyens de mesure pour établir une information de localisation (D) fonction de la position du terminal par rapport à chacun desdits satellites de proximité et des moyens de transmission pour transmettre audit dispositif d'affectation ladite information de localisation.

11. Dispositif selon la revendication 10 caractérisé en ce que, chacun desdits satellites (S1, S2, S3) émettant une porteuse distincte, ladite information de localisation est le décalage Doppler (D) de ladite porteuse.

**Patentansprüche**

1.  Vorrichtung zur Auswahl eines Verbindungssatelliten für ein Endgerät (T) eines Funkkommunikationssystems, das eine Vielzahl von vorbeilaufenden Satelliten umfaßt, dadurch gekennzeichnet, daß sie Meßmittel zum Aufstellen einer Ortungsinformation (D) in Abhängigkeit von der Position des Endgeräts in bezug auf jeden Satelliten (S1, S2, S3) in der Nähe, auf welche es die Synchronisation erlangt hat, Schätzmittel zum Schätzen der Dauer der Sichtbarkeit jedes der Satelliten ausgehend von der Ortungsinformation und Auswahlmittel zum Auswählen desjenigen (S2) der Satelliten umfaßt, der die längste geschätzte Dauer der Sichtbarkeit aufweist.

2.  Vorrichtung zur Positionierung für ein Endgerät (T) eines Funkkommunikationssystems, das eine Vielzahl von vorbeilaufenden Satelliten und eine Zuweisungsvorrichtung zum Zuweisen eines Verbindungssatelliten zu diesem Endgerät umfaßt, dadurch gekennzeichnet, daß wenn das Endgerät (T) die Synchronisation auf Satelliten (S1, S2, S3) in der Nähe erlangt hat, sie Meßmittel zum Aufstellen einer Ortungsinformation (D) in Abhängigkeit von der Position des Endgeräts in bezug auf jeden der Satelliten in der Nähe, Schätzmittel zum Schätzen der Dauer der Sichtbarkeit jedes der Satelliten in der Nähe ausgehend von der Ortungsinformation und Übertragungsmittel zum Übertragen der geschätzten Dauer der Sichtbarkeit von wenigstens zwei der Satelliten in der Nähe, für welche diese Dauer die größte ist, an die Zuweisungsvorrichtung umfaßt.

3.  Zuweisungsvorrichtung eines Funkkommunikationssystems, das eine Vielzahl von vorbeilaufenden Satelliten umfaßt, welche zum Zuweisen eines Verbindungssatelliten unter Satelliten (S1, S2, S3) in der Nähe zu einem Endgerät (T) vorgesehen ist, auf welche dieses Endgerät die Synchronisation erlangt hat, dadurch gekennzeichnet, daß wenn das Endgerät Meßmittel zum Aufstellen einer Ortungsinformation (D) in Abhängigkeit von seiner Position in bezug auf jeden der Satelliten in der Nähe, Schätzmittel zum Schätzen der Dauer der Sichtbarkeit der Satelliten in der Nähe ausgehend von der Ortungsinformation und Übertragungsmittel zum Übertragen der geschätzten Dauer der Sichtbarkeit von wenigstens zwei Satelliten in der Nähe an die Zuweisungsvorrichtung umfaßt, sie den Verbindungssatelliten insbesondere in Abhängigkeit von den vom Endgerät übertragenen, geschätzten Dauern der Sichtbarkeit auswählt.

4.  Zuweisungsvorrichtung eines Funkkommunikationssystems, das eine Vielzahl von vorbeilaufenden Satelliten umfaßt, welche zum Zuweisen eines Verbindungssatelliten unter Satelliten (S1, S2, S3) in der Nähe zu einem Endgerät (T) vorgesehen ist, auf welche dieses Endgerät die Synchronisation erlangt hat, dadurch gekennzeichnet, daß wenn das Endgerät Meßmittel zum Aufstellen einer Ortungsinformation (D) in Abhängigkeit von seiner Position in bezug auf jeden der Satelliten in der Nähe und Übertragungsmittel zum Übertragen der Ortungsinformation von wenigstens zwei der Satelliten in der Nähe an die Zuweisungsvorrichtung umfaßt, sie Schätzmittel zum Schätzen der Dauer der Sichtbarkeit der Satelliten in der Nähe ausgehend von der vom Endgerät übertragenen Ortungsinformation umfaßt, um den Verbindungssatelliten insbesondere in Abhängigkeit von den geschätzten Dauern der Sichtbarkeit auszuwählen.

5. Vorrichtung nach einem der Ansprüche 1 bis 4, dadurch gekennzeichnet, daß wenn jeder der Satelliten eine deutliche Trägerwelle aussendet, die Meßmittel als Ortungsinformation die Doppler-Verschiebung (D) der Trägerwelle zu einem ersten Zeitpunkt liefern.

6. Vorrichtung nach Anspruch 5, dadurch gekennzeichnet, daß die geschätzte Dauer der Sichtbarkeit eine wachsende Funktion des Wertes der Doppler-Verschiebung (D) zu diesem ersten Zeitpunkt ist.

7. Vorrichtung nach Anspruch 5, dadurch gekennzeichnet, daß wenn die Meßmittel außerdem den Wert der Doppler-Verschiebung (D) zu einem zweiten Zeitpunkt liefern, der vom ersten Zeitpunkt durch eine Meßperiode getrennt ist, wobei ein Formfaktor als das Verhältnis der Differenz der Doppler-Verschiebung zum ersten Zeitpunkt und zum zweiten Zeitpunkt zur Meßperiode definiert wird, das vom Vorzeichen der Doppler-Verschiebung zum ersten Zeitpunkt beeinflußt wird, die geschätzte Dauer der Sichtbarkeit eine wachsende Funktion des Inversen des Formfaktors ist.

8. Vorrichtung nach Anspruch 5, dadurch gekennzeichnet, daß wenn die Meßmittel außerdem den Wert der Doppler-Verschiebung (D) zu einem zweiten Zeitpunkt liefern, wobei ein Formfaktor als das Verhältnis der Summe zur Differenz der Doppler-Verschiebung zum ersten Zeitpunkt und zum zweiten Zeitpunkt definiert wird, die geschätzte Dauer der Sichtbarkeit eine wachsende Funktion des Formfaktors ist.

9. Vorrichtung nach Anspruch 5, dadurch gekennzeichnet, daß wenn die Meßmittel außerdem den Wert der Doppler-Verschiebung (D) zu einem zweiten Zeitpunkt liefern, der vom ersten Zeitpunkt durch eine Meßperiode getrennt ist, wobei die Funktion die Doppler-Verschiebung insbesondere zum Zeitpunkt ($T_M$) des Verschwindens darstellt, der durch den Wert der Doppler-Verschiebung zum ersten und zweiten Zeitpunkt bestimmt wird, die geschätzte Dauer der Sichtbarkeit die Differenz des Zeitpunkts des Verschwindens und des zweiten Zeitpunkts ist.

10. Positioniervorrichtung für ein Endgerät (T) eines Funkkommunikationssystems, das eine Vielzahl von vorbeilaufenden Satelliten und eine Zuweisungseinrichtung zum Zuweisen eines Verbindungssatelliten zu diesem Endgerät umfaßt, dadurch gekennzeichnet, daß wenn das Endgerät die Synchronisation auf Satelliten (S1, S2, S3) in der Nähe erlangt hat, sie Meßmittel zum Aufstellen einer Ortungsinformation (D) in Abhängigkeit von der Position des Endgeräts in bezug auf jeden der Satelliten in der Nähe und Übertragungsmittel zum Übertragen der Ortungsinformation zur Zuweisungsvorrichtung umfaßt.

11. Vorrichtung nach Anspruch 10, dadurch gekennzeichnet, daß wenn jeder der Satelliten (S1, S2, S3) eine deutliche Trägerwelle aussendet, die Ortungsinformation die Doppler-Verschiebung (D) der Trägerwelle ist.

## Claims

1. Device for selecting a primary satellite for a terminal (T) of a radiocommunication system comprising a plurality of non-geostationary satellites, characterised in that it comprises measuring means for establishing location information (D) dependent on the position of the terminal relative to each of a plurality of proximity satellites (S1, S2, 53) to which it has acquired synchronisation, estimator means for estimating the time in view of each of said satellites from said location information and selector means for selecting that of said satellites (S2) having the greatest estimated time in view.

2. Location device for a terminal (T) of a radiocommunication system comprising a plurality of non-geostationary satellites and an assignment device for assigning a primary satellite to that terminal characterised in that, the terminal (T) having acquired synchronisation to a plurality of proximity satellites (S1, S2, S3), it comprises measuring means for establishing location information (D) dependent on the position of the terminal relative to each of said proximity satellites, estimator means for estimating the time in view of each of said proximity satellites from said location information and transmission means for transmitting to said assignment device the estimated time in view of at least two of said proximity satellites for which said time is the greatest.

3. Assignment device for a radiocommunication system comprising a plurality of non-geostationary satellites, adapted to assign a primary satellite to a terminal (T) from a plurality of proximity satellites (S1, S2, S3) to which said terminal has acquired synchronisation, characterised in that, said terminal comprising measuring means for establishing location information (D) dependent on its position relative to each of said proximity satellites, estimator means for estimating the time in view of said proximity satellites from said location information and transmission means for transmitting to said assignment device the estimated time in view of at least two of said proximity satellites, it selects a primary satellite in accordance with said estimated times in view transmitted by said terminal.

4. Assignment device for a radiocommunication system comprising a plurality of non-geostationary satellites adapted to assign a primary satellite to a terminal (T) from a plurality of proximity satellites (S1, S2, S3) to which said terminal has acquired synchronisation, characterised in that, said terminal comprising measuring means for establishing location information (D) dependent on its position relative to each of said proximity satellites and transmission means for transmitting to said assignment device said location information of at least two of said proximity satellites, it comprises estimator means for estimating the time in view of said proximity satellites from said location information transmitted by said terminal in order to select a primary satellite according to said estimated times in view.

5. Device according to any one of claims 1 to 4 characterised in that, each of said satellites transmitting a separate carrier, said measuring means produce as location information the Doppler shift (D) of said carrier at a first time.

6. Device according to claim 5 characterised in that said estimated time in view is an increasing function of the value of the Doppler shift (D) at said first time.

7. Device according to claim 5 characterised in that, said measuring means also producing the value of the Doppler shift (D) at a second time separated from said first time by a measurement period, a form factor being defined as the ratio of the difference between the Doppler shifts at said first and second times to said measurement period assigned the sign of the Doppler shift at said first time, said estimated time in view is an increasing function of the inverse of said form factor.

8. Device according to claim 5 characterised in that, said measuring means further producing the value of the Doppler shift (D) at a second time, a form factor being defined as the ratio of the sum of the difference between the Doppler shifts at said first time and at said second time, said estimated time in view is an increasing function of said form factor.

9. Device according to claim 5 characterised in that, said measuring means further producing the value of the Doppler shift (D) at a second time separated from said first time by a measurement period, the function representing the Doppler shift including the time of disappearance ($T_M$) being determined by the value of the Doppler shift at said first and second times, said estimated time in view is the difference between said time of disappearance and said second time.

10. Location device for a terminal (T) of a radiocommunication system comprising a plurality of non-geostationary satellites and an assignment device for assigning a primary satellite to said terminal characterised in that, the terminal having acquired synchronisation to a plurality of proximity satellites (S1, S2, S3), it comprises measuring means for establishing location information (D) according to the position of the terminal relative to each of said proximity satellites and transmission means for transmitting said location information to said assignment device.

11. Device according to claim 10 characterised in that, each of said satellites (S1, S2, S3) transmitting a separate carrier, said location information is the Doppler shift (D) of said carrier.

# FIG.1

# FIG.2

# FIG.3

# FIG.4

# FIG. 5

EP 0 702 865 B1

FIG.6

FIG.7

17